# EUROPEAN PATENT APPLICATION

(11) **EP 4 491 510 A1**
(43) Date of publication of application: **15.01.2025**
(21) Application number: 23185293.0
(22) Date of filing: 13.07.2023
(51) Int. Cl.: B64C 9/16, B64C 9/22, B64C 13/28, B64C 11/44, B64C 13/30, B64C 13/34, B64C 9/18, B64C 9/24, B64C 9/14

(54) **SINGLE FLAP DRIVE SYSTEM FOR DECENTRALIZED FLAP ARCHITECTURES**

(71) Applicant: Airbus Operations GmbH, 21129 Hamburg (DE); Airbus (S.A.S.), 31700 Blagnac (FR)
(72) Inventor: WYREMBEK, Jörg, 21129 Hamburg (DE); Christoph, NAUE, 31700 Blagnac (FR)
(74) Representative: LKGLOBAL Lorenz & Kopf Patentanwalt Attorney at Law PartG mbB

(57) **Abstract**

The invention relates to a drive assembly (1) for driving a movable flow body (2) of an aircraft, comprising: a power drive unit (3), a flight control computer, a first flex shaft (5) connecting the power drive unit (3) to an inboard drive station (6), a second flex shaft (7) connecting the inboard drive station (6) to an outboard drive station (8), a first actuator (9) connected to the inboard drive station (6) and being couplable with the movable flow body (2), a second actuator (10) connected to the outboard drive station (8) and being couplable with the movable flow body (2), the second actuator (10) including a redundant position feedback sensor (11), wherein the power drive unit includes a power-off brake (4), wherein the position feedback sensor (11) is configured to send a position feedback signal to the flight control computer, and the flight control computer is configured to control the power drive unit (3). The invention further relates to a drive system comprising a plurality of drive assemblies (1), to a high lift/flap system, to an aircraft wing and a method for controlling a drive system.

## Description

### Field of the invention

The invention generally relates to movable flap systems. In particular, the invention relates to a drive assembly for driving a movable flow body of an aircraft, a drive system comprising a plurality of drive assemblies, a high lift/flap system, an aircraft wing and a method for controlling a drive system.

### Technical Background

Movable flap systems are typically used in an aircraft to be able to switch between a takeoff or landing configuration with comparatively lower speed and a cruise configuration with higher speed.

The flaps, which are movable flow bodies at the trailing edge of an aircraft, can be set to different positions for certain situations. Since the aerodynamics of an aircraft are basically designed for cruising flight, landing flaps allow the aerodynamics to be adapted to the requirements for special flight manoeuvres such as take-off and landing. By extending and retracting them, the surface area and the profile camber of the wing are artificially enlarged and thus provide more lift. Consequently, the aircraft is already airworthy at very low speeds.

Flap actuation systems can be driven centrally, wherein mechanical transmission shafts are routed along the wing and drive the flaps by a central power drive unit (PDU). This mechanical connection synchronizes the flaps between left-hand and right-hand wing and between inboard and outboard flap on both wings. Centrally driven flap actuation systems guarantee symmetry and uniform movement of all flap surfaces. However, there are also disadvantages such as the difficult physical integration of a long transmission shaft with various supporting bearing and routing direction changing gear boxes, which mandates a complex and heavy system. Furthermore, it uses up valuable installation space behind the wing rear spar which could be used for other purposes.

Therefore, decentralized flap systems have been proposed. If the flaps are driven individually, less components are needed, which saves weight and cost and it is more energy-efficient and thus, more environmentally friendly.

One of the challenges of a decentralized flap system is the synchronization of the different flap surfaces and the ability to detect and prevent additional failure cases.

DE 103 13 728 B4 discloses an airplane high lift surface drive system, wherein the flap system is centrally monitored and wherein the front and rear flaps are mechanically coupled to drives integrated in the wings.

### Summary of the invention

It may be seen as an object of the invention to provide an alternative and improved architecture of a single flap drive system for an aircraft and a method for controlling and monitoring it.

Provided is a drive assembly, a drive system, a high lift/flap system, an aircraft wing and a method according to the features of the independent claims. Further embodiments of the invention are evident from the dependent claims and from the following description.

According to an aspect of the invention, a drive assembly for driving a movable flow body of an aircraft is provided. The drive assembly comprises a power drive unit (PDU) which includes a power-off brake (PoB), and a flight control computer (FCC) which is configured to control the PDU. The drive assembly further comprises two flex shafts, a first flex shaft connecting the PDU to an inboard drive station, and a second flex shaft connecting the inboard drive station to an outboard drive station. The drive assembly further comprises two actuators, a first actuator being connected to the inboard drive station and a second actuator being connected to the outboard drive station. The first and the second actuators are couplable with the movable flow body, which is for example a landing flap of an aircraft, and the second actuator of the drive assembly includes a position feedback sensor, which for example is a redundant position feedback sensor, configured to send a position feedback signal to the FCC.

The inventive drive assembly may be seen as an approach to provide an improved architecture of a single flap drive system and in particular, of a decentralized flap drive system. The architecture has been simplified in that the drive assembly comprises only one sensor and one brake; there is neither a differential gear nor a redundant motor and the assembly may not require a load sensor. All elements are arranged in series such that the PDU is located at the side of the inboard actuator. This arrangement is particularly advantageous in that inboard of the actuators there is usually more installation space available and disconnect failures can be easily detected. Altogether, the new simplistic architecture leads to weight and cost savings and enhances the power efficiency of the drive unit. In addition, a more detailed control and monitoring philosophy, which is explained further below, in connection with this new architecture is unique for a decentralized system.

Generally, the inventive drive assembly is controlled by a flight control computer (FCC), which for example is a redundant flight control computer, which can monitor the position of a movable flow body using the position sensor and can send commands to a motor control electronics (MCE) of the power drive unit (PDU) of the drive assembly.

A movable flow body of an aircraft can be a flap, an elevator, a rudder, an aileron, a spoiler or a slat or any other movable body which comes into contact with the air flow. Preferably, it refers here to a landing flap.

The PDU may be seen as a core element of the drive assembly. It can drive and move the movable flow body, for example a trailing edge flap of an aircraft, to an extended or extracted position relative to the wing structure. It comprises a power-off brake, which is always engaged when the system stands still. The reason is that if the system is not operating vibrations could drive back the actuators. The PDU of the drive assembly can comprise: one motor which can be a single electric motor, a gear in the form of a motor spur gear, and motor control electronics (MCE) which control the speed and direction of the motor. The MCE may also comprise a database containing pre-programmed values, for example speed values. A speed loop inside the MCE may be in place, which uses the internal motor speed signal. The specific motor characteristics may dictate the time it needs to accelerate and decelerate the system to the desired speed.

Two flex shafts are needed to connect the PDU and the actuators. A flexible shaft, also referred to as a 'flex shaft', is a device for transmitting rotary motion between two objects which are not fixed relative to one another. It consists of a rotating wire rope or coil which is flexible but has some torsional stiffness. It may or may not have a covering, which also bends but does not rotate. Flex shafts are well known in the art. In the present inventive assembly the flex shafts connect the PDU with an inboard drive station and then the inboard drive station to an outboard drive station in order to transmit a uniform movement by the motor of the PDU to the actuators.

Two actuators move the movable flow body into an extended or retracted configuration with respect to the wing structure. In general terms, an actuator is a part of a device or machine that helps it to achieve physical movements by converting energy, for example electrical or hydraulic energy, into mechanical force. Simply put, it is the component in any machine that enables movement. Based on the motion, actuators can be classified as linear actuators or rotary actuators, wherein linear actuators provide mechanical forces in a straight line, i.e. they only have a push and pull motion. In the assembly of the invention, different types of linear actuators can be used, which may, for example, not need to have incorporated a no-back device because the screws are non-backdrivable under normal conditions.

The second actuator which is connected to the outboard drive station includes a position feedback sensor. There are several types of position sensors, for example angular, rotary, or linear, which sensors utilize various technologies to sense position. The sensor is configured to detect the current position of the movable flow body and is thus capable to detect longitudinal movement of, for example, the flaps lever. The position feedback sensor is configured to send a position feedback signal to the FCC and may send a signal via dual channel for two flight control computers, FCC1 and FCC2. A voltage reference for the position feedback sensor may be necessary and may be incorporated within the sensor.

According to an embodiment, the first and second actuators are acme screw actuators, respectively.

Acme screws use trapezoidal threads to roll onto the lead screw. As the shaft rotates and the rotary motor turns, the threads push the shaft nut forward or backward depending on the direction of the rotating motion. This transfers the circular force of the motor into linear motion on the shaft. Due to the low efficiency the acme screw actuators are self-locking and do not necessarily require a separate braking system to be installed. That is, no specific no-back device is to be incorporated.

According to an embodiment, at least one separate gearbox is attached to the input of the actuators.

As it is known in the art a gearbox is a mechanical component used to change the speed and increase the motor's torque. With gearboxes in general, the forces or torques and the speeds of the actuators can be adjusted. The gearbox(es) may be attached to the actuator's input(s) and may be of use in setting an exact speed for the actuators which move the movable flow body.

According to an embodiment, a load sensor is integrated on the drive station of at least one actuator.

A load sensor is an electronic device that converts tension and compression forces into a corresponding electrical signal. The two simplest load sensor designs are the hydraulic load sensor and the pneumatic load sensor. The hydraulic sensor uses liquid and the pneumatic uses gas. When a tension or compression force is applied, the liquid or gas will expand or contract, generating an electrical signal that is directly proportional to the force applied. To measure force with load sensors (also referred to as force sensors), the sensor is ideally positioned in such a way that the entire force flows through the sensor and the force sensor is directly in the force flow. In the assembly of the invention, an optional sensible position is on the drive station of an actuator. There may be one load sensor integrated on only one drive station of an actuator or it may be advantageous to use two load sensors, i.e. one sensor on each drive station. Whether or not one sensor is sufficient depends on the actuator loads. By means of the load sensor(s) it is for example possible to detect a flap attachment disconnect.

According to an embodiment, the PDU is positioned inboard of the actuators.

This means that all stations are arranged in a row. It is thus possible to drive an aircraft movable without a differential gear and without a redundant motor. Due to such an arrangement, several failure cases may be detected using only one sensor, for example one position feedback sensor.

According to an aspect of the invention, a drive system comprising a plurality of drive assemblies is provided, wherein the drive assemblies are independent from each other, such that individual flow bodies can be moved independently from each other.

The system comprises individually driven flaps and may comprise flap pairs, the movement of which is controlled by a redundant flight control computer, for example FCC1 and FCC2. The system may typically further include a power supply, a circuit breaker and a communication bus. Each flap panel corresponds to one drive assembly, as explained above, and consequently is driven by an individual PDU. Each PDU gets its own command which may depend on the individual position of the flap. Hence, the flaps may be retracted and extended individually and with different speeds at the same time. The system may be a so-called Variable Shape Trailing Edge (VSTE) system, wherein flap pairs, for example 3 flap pairs, may have different flap angles for each setting. For example, in a landing setting: Flap pair 1: 35deg, Flap pair 2: 30deg, and Flap pair 3: 20deg. All flap pairs may be movable in the same speed and may also reach the intended position at different times.

The drive system can be modified for a commercial aircraft application, where, inter alia, the safety requirements are also higher. For example, the availability of the drive function needs to be higher and certain failure cases such as flap attachment disconnect and screw rupture may have to be considered.

According to an embodiment, each assembly of the plurality of drive assemblies of the system further comprises a second electric motor, a torque summing gear and at least one load sensor on a drive station actuator.

In this configuration, the PDU has been made redundant and more effective by incorporating a second electric motor and a torque summing gear. Thus, if one of the motors fails, the other can still drive the flap, although the total power is halved. At least one load sensor is also included to increase safety. Depending on the actuator loads it may be recommended to use one sensor on each drive station. As mentioned above, this can be used to detect a flap attachment disconnect.

According to an embodiment, each assembly of the plurality of drive assemblies of the system further comprises a brake located downstream after the torque summing gear and between the inboard and outboard drive station actuators, wherein the brake is designed as a constant friction brake.

Thus, it would be ensured that a shaft rupture would not lead to a movement of the system although the brake is engaged.

According to a further embodiment, the actuators of the drive assemblies are ball screw actuators or geared rotational actuators which further include a no-back device.

With enclosed recirculating ball bearings that travel on a threaded shaft with minimal friction, a ball screw actuator acts as a precision screw that is able to accommodate heavy loads. Geared Rotational Actuators are mechanically operable devices widely used in the aerospace industry so that controlled motion can be provided to secondary flight control surfaces. This variant has a better power-efficiency compared to a system with acme screws. The functionality of the no-back device may need to be monitored using a load sensor.

According to an aspect of the invention, a high lift or flap system is provided comprising at least one movable flow body, wherein the at least one movable flow body is couplable to at least one drive assembly, or wherein the at least one movable flow body is couplable to at least one drive system, as described above.

According to a further aspect of the invention, an aircraft wing is provided which comprises at least one drive system or at least one drive assembly as described herein.

In an example, an aircraft comprising the drive system as described herein is provided.

According to another aspect, a method for controlling a drive system comprising a plurality of drive assemblies for driving a movable flow body of an aircraft by a redundant flight control computer (FCC) is provided. In a step of the method the position of a movable flow body is monitored by a redundant FCC via a position sensor. In another step, the FCC sends an activation command to a power drive unit (PDU) of at least one of the drive assemblies, for example via digital bus. In another step the FCC sends a direction command and a speed command to the PDU. In yet another step, the FCC sends a brake command to the PDU. The speed command is either "low speed" or "high speed" and corresponds to pre-programmed speed values in the motor control electronics (MCE) of the PDU. The method steps may be performed in the indicated order.

According to an embodiment, each drive assembly gets individual commands from the FCC to its PDU depending on the individual position of the movable flow body which is detected by the position sensor. It follows that each flap may be driven individually.

According to an embodiment, the method further comprises the monitoring of failure cases. Failure cases of a drive assembly or drive system for driving one or more movable flow bodies of an aircraft are monitored by use of a single position sensor, wherein the following scenarios can be detected: a shaft rupture or jam can be detected if the position sensor detects no movement but a drive command; a powered runaway of a PDU can be detected by calculating a speed of the drive assembly with the derivative of the position sensor signal; an uncommanded movement can be detected if the position sensor detects no drive command but a movement.

According to an embodiment the method further comprises detecting a flap attachment disconnect failure of an aircraft using at least one load sensor introduced at a drive station actuator of a drive system according to the example above.

### Brief description of the drawings

The present invention will hereinafter be described in conjunction with the following drawing figures, wherein like numerals denote like elements, and wherein:
- Fig. 1: shows a schematic illustration of a drive assembly for driving a movable flow body of an aircraft.
- Fig. 2: shows a schematic diagram of a drive system comprising a plurality of drive assemblies.
- Figs. 2a and 2b: show enlarged sections of Fig. 2.
- Fig. 3: shows a schematic illustration of an adapted drive assembly for driving a movable flow body of an aircraft.
- Fig. 4: is a diagram showing a drive sequence for extending a movable flow body of an aircraft.

### Detailed description of exemplary embodiments

The representations and illustrations in the drawings are schematic and not to scale. A better understanding of the assembly, the system and the methods described above may be obtained through a review of the illustrations accompanying this application together with a review of the detailed description that follows.

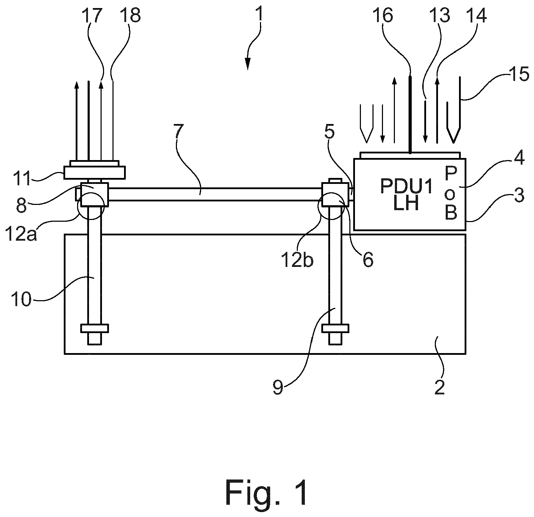

Fig. 1 shows a drive assembly 1 for driving a movable flow body 2 of an aircraft. The movable flow body 2, which is for example a landing flap, is coupled to acme screw actuators 9, 10. The acme screw actuators 9, 10 are each coupled to drive stations 6, 8, wherein the first acme screw actuator 9 is coupled to the inboard drive station 6 and the second acme screw actuator 10 is coupled to the outboard drive station 8. For simplicity, the coupling mechanisms are not shown. A power drive unit (PDU) 3 is positioned in series and inboard of the acme screw actuators 9, 10. The PDU 3 is connected to the inboard drive station 6 with a flex shaft 5, and the inboard drive station 6 is connected to the outboard drive station 8 with a flex shaft 7. The PDU 3 contains, among other things such as the motor spur gear, the motor and motor control electronics (MCE) (not shown), a power-off brake (PoB) 4. A position feedback sensor 11 is located at the outboard actuator 10, for example at the outboard drive station 8.

In an example, the position feedback sensor 11 gives a position feedback signal 17 to the Flight Control Computer (FCC) (not shown), wherein there is further provided a voltage reference 18 for the position feedback sensor 11. The PDU 3 receives 28 VDC power supply 16. In an example, the FCC sends an Enable Signal 13 to the PDU 3, which enables the PDU 3 to perform an operation. The PDU 3 sends a Power Avail Signal 14 to the FCC, indicating that the PDU is powered. A RS485 databus 15 is provided for receiving commands from the FCC and to provide status info to the FCC.

In an example, load sensors 12a, 12b are integrated on the drive stations 6, 8 of the acme screw actuators 9, 10 in order to detect a flap attachment disconnect.

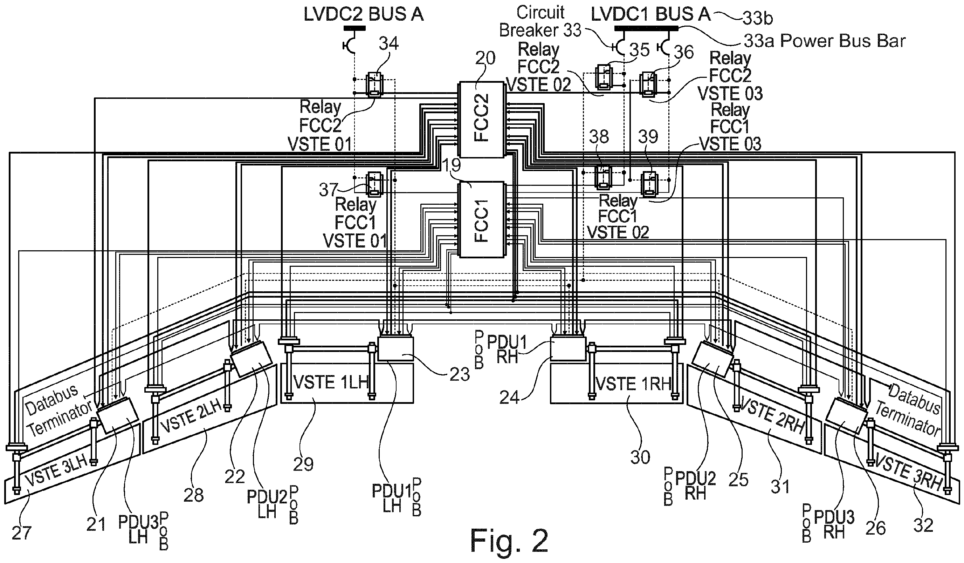

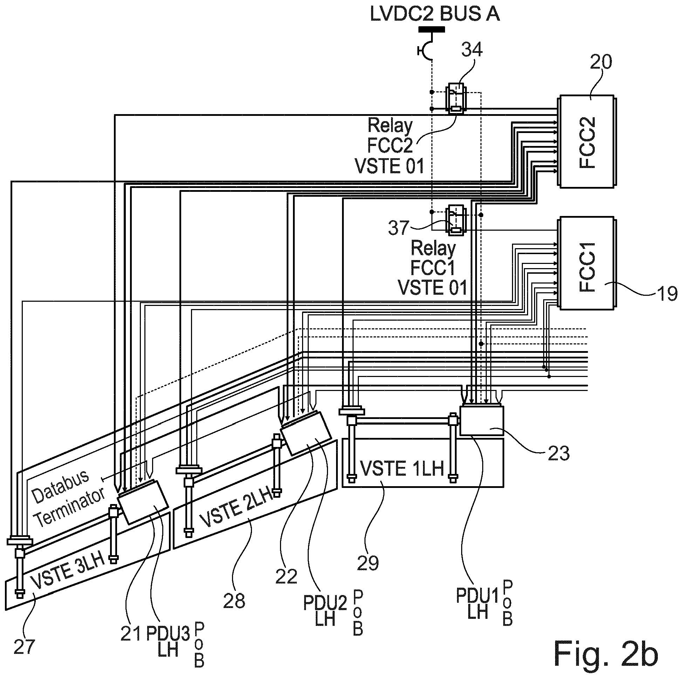

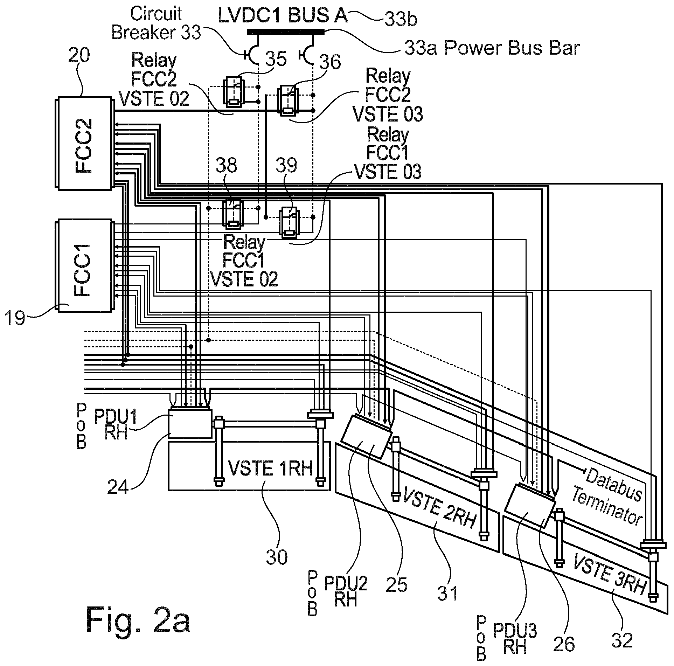

Fig. 2 shows a schematic diagram of a drive system comprising a plurality of drive assemblies 1 as described above. The system is called a Variable Shape Trailing Edge System (VSTE). The schematic shows the general architecture including power supply 33a, circuit breaker 33 and communication bus 33b. Three flap pairs are shown which are controlled by a redundant flight computer FCC1, FCC2 19,20, and which are driven individually. That is, the outermost flaps VSTE3LH and VSTE3RH 27, 32 of each wing form a pair, the middle flaps VSTE2LH and VSTE2RH 28, 31 of each wing form a pair, and the innermost flaps VSTE1LH and VSTE1RH 29, 30 of each wing form a pair. However, each flap 27, 28, 29, 30, 31, 32 is driven by its own PDU 21, 22, 23, 24, 25, 26 which is individually controlled by the redundant Flight Control Computer FCC1, FCC2. In this architecture the Flight Control Computer FCC1 19 is coupled to three relays (37-39) and also the Flight Control Computer FCC2 20 is coupled to three relays (34-36).

For a better legibility, Figs. 2a and 2b show the right and the left side of Fig. 2 slightly enlarged.

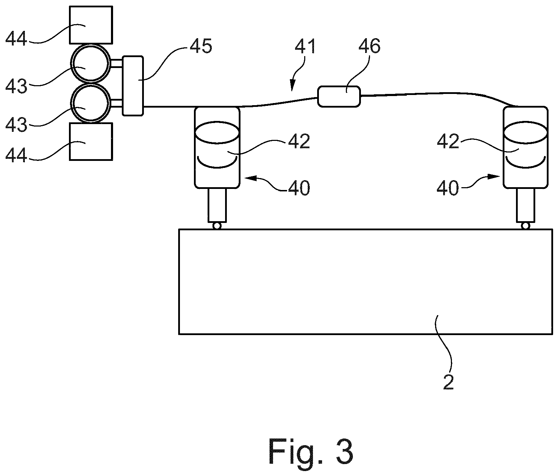

Fig. 3 shows a schematic illustration of a modified VSTE Drive System for Commercial Aircraft Application. The movable flow body 2 is a landing flap of an aircraft, which is coupled to two actuators 40. The PDU is made redundant, i.e. two electric motors 43 with two motor control electronics (MCE) 44 and a torque summing gear 45 are provided. To detect a flap attachment disconnect one load sensor 42 is introduced on each actuator 40. A brake 46 is located downstream on the flex shaft 41 after the torque summing gear 45 and between the inboard and outboard drive station actuator 40. This ensures that a shaft rupture would not lead to a movement of the system although the brake is engaged.

In an example, a no-back device (not shown) is involved on ball screw or geared rotational actuators 40. This variant has a better power-efficiency. In a further example, the no-back device is monitored using the load sensor(s) 42.

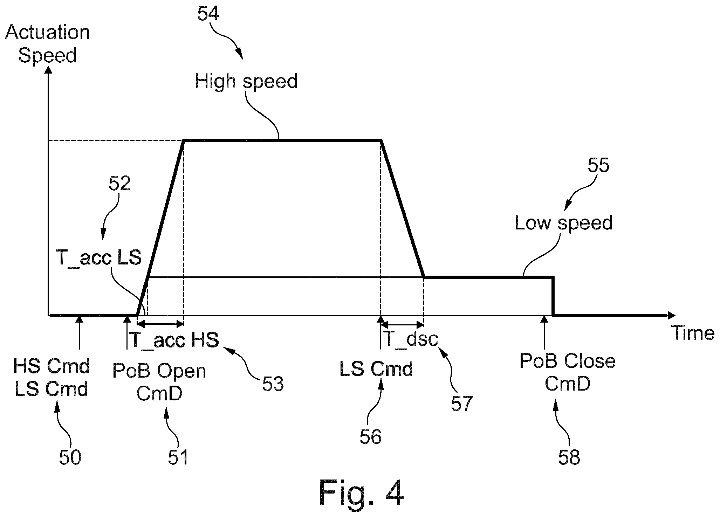

Fig. 4 is a diagram showing a drive sequence for moving a flow body 2 of an aircraft. The speed loop which is saved in the database of the MCE starts with a high speed or low speed command 50, whereupon the PDU receives the command 51 to open the power-off brake (PoB) from the FCC. If the first command 50 was a low speed command there is a predetermined time 52 for accelerating to low speed; if the first command 50 was a high speed command there is a predetermined time 53 for accelerating to high speed. Then, either high speed 54 or low speed 55 is maintained. If the first command 50 was a high speed command and the high speed 54 has been held for a certain time, the PDU will receive the command 56 to return to low speed and a predetermined time will be spent to decelerate to the low speed 57. Before the speed is reduced to zero, the PDU receives the command 58 to close the power-off brake (PoB).

## Claims

1. A drive assembly (1) for driving a movable flow body (2) of an aircraft, comprising:
- a power drive unit (3),
- a flight control computer,
- a first flex shaft (5) connecting the power drive unit (3) to an inboard drive station (6),
- a second flex shaft (7) connecting the inboard drive station (6) to an outboard drive station (8),
- a first actuator (9) connected to the inboard drive station (6) and being couplable with the movable flow body (2),
- a second actuator (10) connected to the outboard drive station (8) and being couplable with the movable flow body (2), the second actuator (10) including a redundant position feedback sensor (11),
- wherein the power drive unit (3) includes a power-off brake (4),
- wherein the position feedback sensor (11) is configured to send a position feedback signal to the flight control computer, and the flight control computer is configured to control the power drive unit (3).

2. Drive assembly (1) according to claim 1, wherein the first and second actuators (9, 10) are acme screw actuators, respectively.

3. Drive assembly (1) according to claim 1 or 2, wherein at least one separate gearbox is attached to the input of the actuators (9, 10).

4. Drive assembly (1) according to any one of the preceding claims, wherein a load sensor (12a, 12b) is integrated on the drive station of at least one actuator.

5. Drive assembly (1) according to any of the preceding claims, wherein the power drive unit (3) is positioned inboard of the actuators (9, 10).

6. A drive system comprising a plurality of drive assemblies (1) according to any of the preceding claims, wherein the drive assemblies (1) are independent from each other, such that individual flow bodies (2, 27, 28, 29, 30, 31, 32) can be moved independently from each other.

7. Drive system according to claim 6, each assembly (1) further comprising a second electric motor (43), a torque summing gear (45) and at least one load sensor (42) on a drive station actuator (40).

8. Drive system according to claim 7, each assembly (1) further comprising a brake (46) located downstream after the torque summing gear (45) and between the inboard and outboard drive station actuators (40);
wherein the brake (46) is designed as a constant friction brake.

9. Drive system according to any of claims 6 to 8, wherein the actuators (40) are ball screw actuators or geared rotational actuators; and
wherein the actuators further include a no-back device.

10. A high lift/flap system comprising:
- at least one movable flow body (2, 27, 28, 29, 30, 31, 32);
wherein the at least one movable flow body (2, 27, 28, 29, 30, 31, 32) is couplable to at least one drive assembly according to any of claims 1 to 5, or
wherein the at least one movable flow body (2, 27, 28, 29, 30, 31, 32) is couplable to at least one drive system according to any of claims 6 to 9.

11. An aircraft wing comprising:
- at least one drive assembly according to any of claims 1 to 5, or
- at least one drive system according to any of claims 6 to 9.

12. A method for controlling a drive system comprising a plurality of drive assemblies (1) for driving a movable flow body (2) of an aircraft by a redundant flight control computer, comprising:
- monitoring the position of a movable flow body (2) by the flight control computer using a position sensor (11),
- sending an activation command (13) from the flight control computer to a power drive unit (3) of at least one of the drive assemblies (1),
- sending a direction command and a speed command from the flight control computer to the power drive unit (3), and
- sending a brake command from the flight control computer to the power drive unit (3),
wherein the speed command is either "high speed" or "low speed", and wherein the "high speed" or "low speed" commands correspond to pre-programmed speed values in a motor control electronics of the power drive unit (3).

13. Method according to claim 12, wherein each drive assembly (1) gets individual commands from the flight control computer to its power drive unit (3) depending on the individual position of the movable flow body (2) which is detected by the position sensor (11).

14. Method according to claim 12 or 13, further comprising, for monitoring failure cases of a drive assembly (1) or a drive system for driving one or more movable flow bodies (2) of an aircraft by use of a single position sensor (11):
- detecting a shaft rupture or jam if the position sensor (11) detects no movement but a drive command,
- detecting a powered runaway of a power drive unit by calculating a speed of the drive assembly (1) with the derivative of the position sensor signal (11),
- detecting an uncommanded movement if the position sensor (11) detects no drive command but a movement.

15. Method according to claim 12, 13 or 14, further comprising: detecting a flap attachment disconnect failure of an aircraft using at least one load sensor (42) introduced at a drive station actuator (40) of a drive system according to claim 7.
